# EUROPEAN PATENT APPLICATION

(11) **EP 3 101 381 A1**
(43) Date of publication of application: **07.12.2016**
(21) Application number: 15170598.5
(22) Date of filing: 03.06.2015
(51) Int. Cl.: G01B 11/02, G01C 3/08

(54) **METHOD AND APPARATUS FOR MEASURING AN AREA OF A TARGET SURFACE**

(71) Applicant: AC (Macao Commerical Offshore) Limited, Macao (MO)
(72) Inventor: Hudry von Vopelius, Christophe Laurent, 90762 Fürth (DE)
(74) Representative: Stevenson-Hill, Jack Patrick

(57) **Abstract**

The present invention describes a laser measuring apparatus including a laser transceiving module, a controller connected to the laser transceiving module, and a user input module. The controller is connected to the user input module and adapted to receive instructions from a user via the user input module. Upon receiving a first command from the user input module, the controller is configured to control the laser transceiving device to continuously transmit and receive laser signals to generate a set of distance measurement values as the user points the laser measuring apparatus to different points on a target surface. The controller is further configured to determine the minimum distance from the set of distance measurement values. By using the automatic scanning along on the target surface, the apparatus can automatically find the shortest distance from the laser measuring device to the target surface, i.e. the orthogonal distance.

## Description

### FIELD OF INVENTION

The present invention relates to an apparatus and method for measuring and area of a target surface, and particularly, although not exclusively to a method and apparatus for measuring an area of a wall using laser signals.

### BACKGROUND OF INVENTION

Laser measuring technologies have been used widely in the field of construction and house decoration. One common use of the laser measuring device is a straight-line distance measurement. In addition, since it is difficult to measure the area of a surface on an object directly, there are developed various mathematical formulas and equations for calculating areas of different shapes and forms on a wall. For example, it would be possible to use the length of the height and the base of a rectangular wall to solve for its area. Theoretically, areas of all shapes and forms can be calculated using one or the other mathematical methods such as geometric equations or integration and differentiation methods.

EP2863175A filed by the applicant of this invention discloses laser assisted area measurement device and method. Fig. 1 shows one of the arrangements disclosed in this patent document which takes five separate measurements to determine the area of the rectangular region **110** on the wall. The five measurements measure different distances from the laser measuring device **120** to five points on the target surface **110.** In doing so for example the user actuates the device **120** and transmits laser signals to the point **112** on the target surface **110.** The device **120** then receives the signal reflected back from the point **112** of the target surface **110** and determines the distance between the device **120** and that point. The device **120** is placed in a position such that the line **104** of the first distance between the device **120** and the target area **110** is substantially orthogonal to the plane of the target surface **110.** The above process repeats until the device **120** successfully determines all five values of the distance **100, 102, 104, 108** and **106** between the device **120** and the target surface **104.** The device **120,** after determining the required distance values, automatically calculates the area of the target surface **110** using formulas associated with the area measurement method.

However, it is often difficult to measure precisely the orthogonal distance from the laser device to the target surface in conventional area measurement methods. The orthogonal distance like that is required in the EP2863175A needs the laser device to point to the target surface along an exact orthogonal direction but in practice the user cannot determine whether he is really pointing the laser device to such direction based on his bare eyesight and hand feeling. This is because based on human sensations it is theoretically impossible to find a perfect horizontal or vertical direction. The case is even worse when the target surface is not oriented to be substantially vertical or horizontal, but for example the surface is inclined, in which case the user cannot rely on any surrounding references or the force of gravity to help him determine the orthogonal direction to the surface.

### SUMMARY OF INVENTION

In the light of the foregoing background, it is an object of the present invention to provide an alternate way of measuring an orthogonal distance from a laser measuring device to a target surface in area measurements.

The above object is met by the combination of features of the main claim; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention, in one aspect, is a laser measuring apparatus including a laser transceiving module, a controller connected to the laser transceiving module, and a user input module. The controller is connected to the user input module and adapted to receive instructions from a user via the user input module. Upon receiving a first command from the user input module, the controller is configured to control the laser transceiving device to continuously transmit and receive laser signals to generate a set of distance measurement values as the user points the laser measuring apparatus to different points on a target surface. The controller is further configured to determine the minimum distance from the set of distance measurement values.

Preferably, the controller is further adapted to stop the continuously transmitting and receiving the laser signals upon receiving a second command from the user input module.

In one variation, the user input module is a button. The first command is triggered by the user input module when the user presses down the button.

In another variation, the user input module is a button. The second command is triggered by the user input module when the user releases the button after the button has been continuously pressed down.

According to another aspect of the invention, a laser measuring method contains the steps of transmitting a laser signal to a target surface by a laser measuring apparatus; receiving reflected laser signal from the target surface by the laser measuring apparatus, and calculating the distance between the laser measuring apparatus and the target surface. The laser measuring method further includes the step of generating a set of distance measurement values by continuously transmitting and receiving laser signals to the target surface as the user points the laser measuring apparatus to different points on the target surface; and determining the minimum distance from the set of distance measurement values.

Preferably, the generating step starts upon a controller of the laser measuring device receiving a first command from a user input module of the laser measuring device.

More preferably, the controller is further adapted to stop the continuous transmitting and receiving laser signals upon receiving a second command from the user input module.

In one implementation, the user input module is a button. The first command is triggered by the user input module when the user presses down the button.

In another implementation, the user input module is a button. The second command is triggered when the user releases the button after the button has been continuously pressed down.

In one implementation, in the generating step the user points the laser measuring apparatus to points on the target surface which are aligned in a linear trace in which an orthogonal point is included.

There are many advantages to the present invention. For example, by using the automatic scanning along on the target surface, the apparatus can automatically find the shortest distance from the laser measuring device to the target surface, i.e. the orthogonal distance. As human beings cannot decide and align to perfect horizontal / vertical status of an object, the apparatus according to the present invention can help the user to find the orthogonal distance because such orthogonal distance would inherently be included in a set of measurement results. To find the orthogonal distance is then just a mathematical comparison as based on geometry theories the orthogonal distance from a point outside of a planar surface to the surface must be the shortest line length from that point to the surface.

### BRIEF DESCRIPTION OF FIGURES

The foregoing and further features of the present invention will be apparent from the following description of preferred embodiments which are provided by way of example only in connection with the accompanying figures, of which:
Fig. 1 is an illustration of a conventional laser-assisted area measurement method.
Fig. 2 shows the laser measuring device according to one embodiment of the present invention.
Fig. 3 shows the system block diagram of the laser measuring device according to one embodiment of the present invention.
Fig. 4 shows the work flow of the laser-assisted distance measurement according to one embodiment of the present invention.
Fig. 5 shows the geometrical principle of orthogonal distance measurement according to one embodiment of the present invention.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

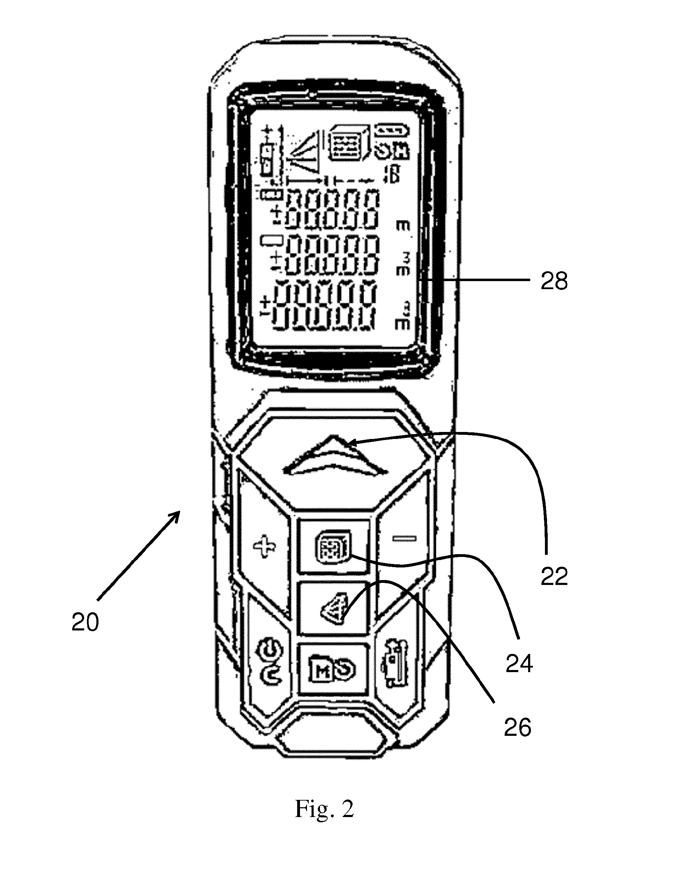

Referring now to Fig. 2, the first embodiment of the present invention is a laser measuring apparatus **20** which is in the form of a handheld device. The laser measuring apparatus is configured with a display **28,** for example a LCD display or a LED display. The display **28** is capable of displaying a number of different information such as the instant measured distance, a historical distance, calculated area of a target surface, and also logos indicating the operation mode that the laser measuring apparatus **20** is currently in. There are also indicators on the display **28** which guides the user to perform certain steps of distance measurement along particular directions in order to obtain all the necessary distances to solve out the area.

There are also numerous keys in the keypad region of the laser measuring apparatus **20** which allows the user to operate the laser measuring apparatus **20.** For example, the interior volume measurement key **24** once pressed switches the laser measuring apparatus **20** to the volume measurement mode. The area measurement key **26** once pressed switches the laser measuring apparatus **20** to the surface area measurement mode. The main button **22** is the activation key for starting the laser distance measurement. As skilled persons would understand, all the laser-assisted area and space measurement ultimately rely on individual distance measurement to certain points / edges in geometry. These line distances will then be used to compute the required volume / area based on established equations, formulas, and geometrical models.

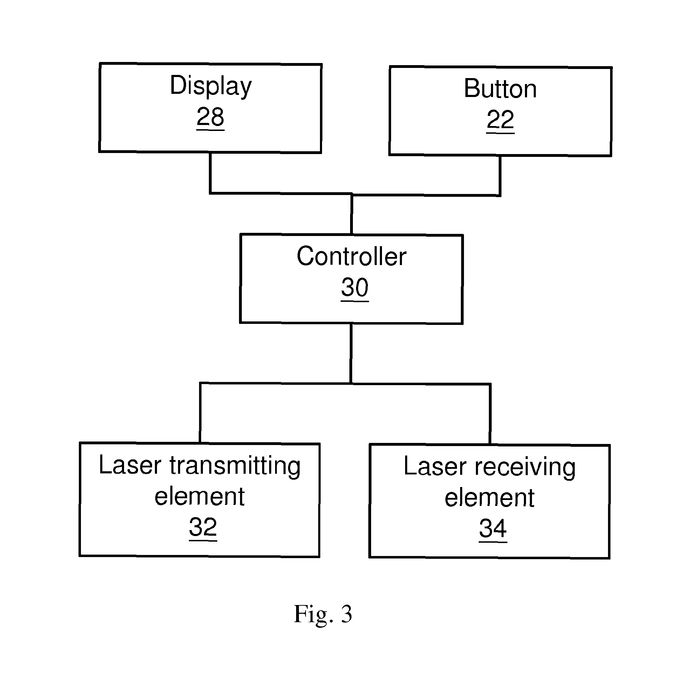

Fig. 3 shows a simplified circuit block diagram for the laser measuring device in Fig. 2. The core component of the laser measuring device is the controller **30** which may be implemented on a microprocessor or a single-chip machine. The controller **30** is electrically connected to the display **28** to drive the display **28** to display relevant information during the measurement as those exemplified above. The controller **30** also connects to a laser transmitting element **32** and a laser receiving element **34.** The laser transmitting element **32** and the laser receiving element **34** together form the laser transceiving module. The laser transmitting element **32,** for example a laser diode, is configured to transmit laser signal to a target site upon receiving control commands from the controller **30.** The laser receiving element **34,** for example a light sensor, detects reflected laser signal which was sent by the laser transmitting element **32** and reflected by the target surface. By detecting the time elapsed from sending out the laser signal to receiving the reflected laser signal, the laser measuring device could calculate the distance between the laser measuring device and the target surface, as skilled persons would understand. The output of the laser receiving element **34** is then provided to the controller **30** as it is connected to the laser receiving element **34.** The main button **22** and other buttons / keys in the laser measuring apparatus are also connected to the controller **30** to receive the user's input as commands to the controller **30.** For simplicity, only the main button **22** is shown in Fig. 3.

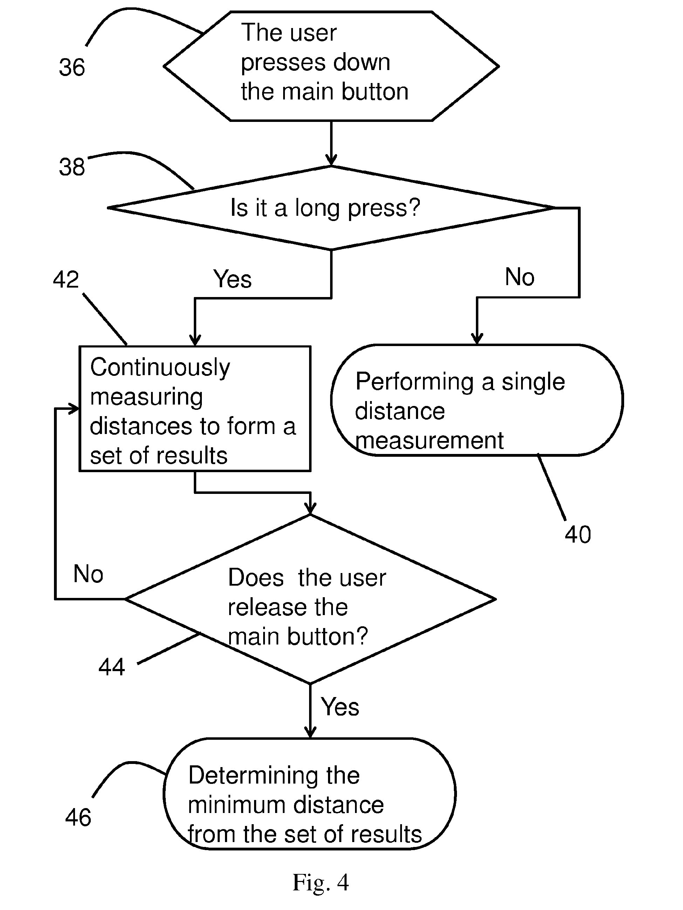

Now turning to the operation of the device described above, Fig. 4 shows how the laser measuring device according to the present invention can be used to carry out orthogonal distance measurement. The user firstly powers on the laser measuring device and enters the desired measurement mode (distance, area or volume) if necessary, such as by using the function keys as shown in Fig. 2. Then, in the desired measurement mode the user may need to measure the orthogonal distance from the laser measuring device to the target surface such as a wall. As shown in Fig. 4 in Step **36** the user presses down the main button to start the measurement. After the user presses the main button, the controller of the laser measuring device in Step **38** determines whether the action of pressing down is single-time, i.e. the user quickly taps the button and then releases his finger from the button, or continuous, i.e. the user keeps holding the button down (which is also known as a long press) . If the controller determines that the user's finger action is not a long press, then the laser measuring device would only conduct a single distance measurement in Step **40,** and this measurement result is treated as the value of the orthogonal distance from the laser measuring device to the target surface. It is apparent that the user in this single measurement must ensure that he points the laser measuring device precisely along an orthogonal direction to the target surface, otherwise the result will be inaccurate.

In the context of this specification, the orthogonal distance means the shortest distance from an external point outside of a planar surface (e.g. where the laser measuring device is located) to the planar surface (e.g. a wall). The orthogonal point is the point on the planar surface which is the intersection point of the planar surface and the shortest line connecting the external point to the planar surface.

However, if in Step **38** the controller determines that the user's finger action is indeed a long press, then the laser measuring device will be continuously measuring the distance until the user release the main button by removing his fingertip therefrom. In particular, in Step **42** as long as the user keeps holding down the main button, the controller of the laser measuring device commands the laser transceiving device to continuously transmit laser signals to the target surfaces and receive reflected laser signals to determine the distance from the laser measuring device to the target surface of the wall. Preferably, during this continuous measurement the user gradually rotates the laser measuring device to alter its orientation with respect to the target surface. This would create on the target surface in a certain trace of reflection points where for each of the points there is laser signal reflection happened, and distance from that point to the laser measuring device is measured. Preferably, the user "wipes" or scans the target surface preferably along a sufficiently long trace on the target surface which includes the point which is at the possible shortest distance.

During the continuous measurement, the controller of the laser measuring device keeps monitoring the user input in Step **44,** i.e. whether the user has released the main button. If it is detected that the user is still pressing down the main button, then the method goes back to Step **42** and there is essentially iteration between Step **42** and Step **44.** However, once the continuous scanning or "wiping" is finished, such as when the reflection point moves to an edge of the target surface, or the user finds satisfactory that the orthogonal reflection point should have been included in the measurements, then he simply releases the main button by moving his finger tip from contacting the main button. Then, in Step **44** the controller will detect this change of input and the method goes to Step **46.** In Step **46,** as the continuous measurement has completed the controller of the laser measuring device computes for the shortest distance measured in the continuous measurement. Based on the Pythagoras theory the shortest distance would be the orthogonal distance from the laser measuring device to the target surface.

The laser distance measurement according to the present invention therefore can be used for many purposes. For example, the shortest distance from the laser measuring device to the target surface may be the final outcome when the user only needs to know the orthogonal distance from the place he is standing at to the target surface such as a wall. The shortest distance may also be used in carrying out more sophisticated laser measurement for areas / three-dimensional space volume. Alternatively, the work flow illustrated in Fig. 4 can be used for non-orthogonal distance measurement, e.g. from the laser measuring device to a wall corner, in which case the user does not need to use the long-press scanning function but he can simply press the button once to do the one time measurement.

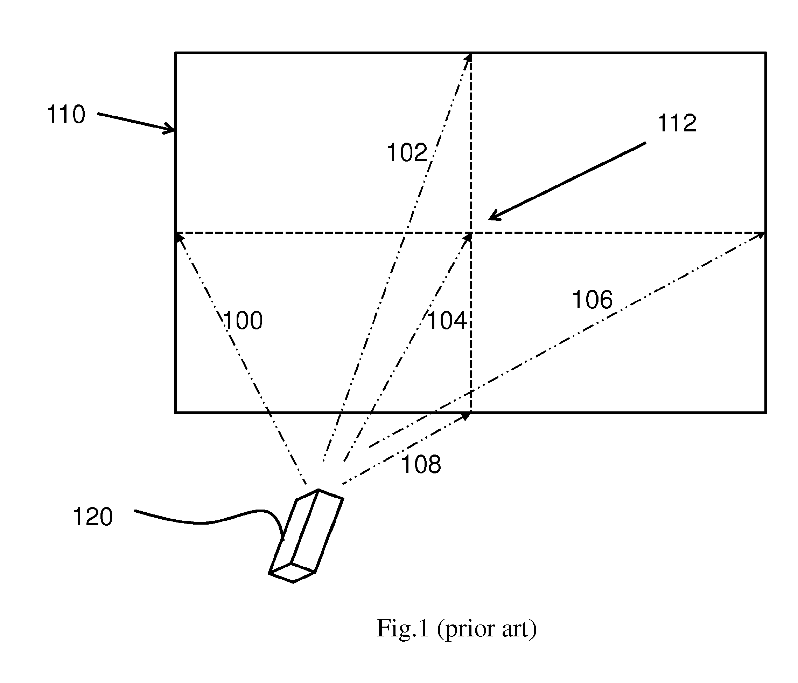

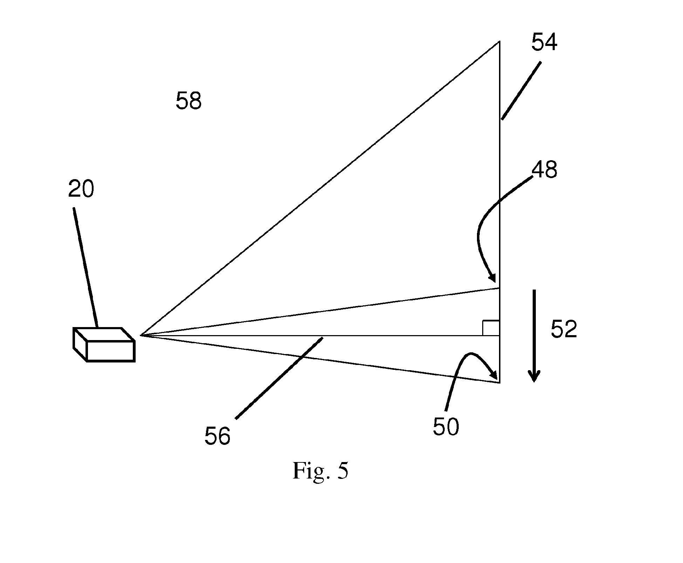

Turning now to Fig. 5, the illustration shows a typical wall area measurement method according to one embodiment of the present invention. The target surface in this example is a vertical wall. The laser measuring device **20** according to the present invention may be operated to conduct distance measurement which is one of many individual steps of carrying out area measurement. As in the case shown in Fig. 1, at least one of the distances to be measured is an orthogonal distance, which is the shortest distance from the laser measuring device to the target surface. To determine such orthogonal distance, the user starts the continuous measurement in a way similar to that described above at Point **48,** which is not the orthogonal point but nonetheless close to it. The user then performs continuous distance measuring by pointing the laser measuring device downwardly along the target surface, which is shown by the arrow **52.** During this continuous measurement the shortest distance **56** would have been included in the set of results. The continuous measurement keeps being performed until it reaches the lower Point **50.** The user then release the button on the laser measuring device and the device will automatically calculate the shortest distance **56.** Based on the shortest distance **56** and other distances **58, 60** measured from the laser measuring device to top and bottom ends of the target surface, the height of the target surface can be determined using the Pythagorean Theorem. The width of the target surface can also be measured using similar approach and given the height and width of the target surface its area can be calculated.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

For example, although the exemplary embodiments above describe laser measuring devices with a single main button for activating continuous measurement of distances or "wiping", in other variations skilled persons may also use other types of input means to control the operation of continuous measurement. For example, there can be two keys configured on the laser measuring device, one is the start key and the other one is the stop key. When the user presses the start key the measurement will start and continue, without the needs for the user to keep holding the start key. When the user would like to stop the measurement, he can presses the stop key which causes the laser measuring device to stop measuring but provides the minimum distance value from the data already collected. Other types of user input means can also be deployed which would falls into the scope of the present invention.

## Claims

1. A laser measuring apparatus comprising a laser transceiving module, a controller connected to the laser transceiving module, and a user input module; the controller connected to the user input module and adapted to receive instructions from a user via the user input module; the laser measuring apparatus **characterized in that**:
upon receiving a first command from the user input module, the controller configured to control the laser transceiving device to continuously transmit and receive laser signals to generate a set of distance measurement values as the user points the laser measuring apparatus to different points on a target surface; and
the controller further configured to determine the minimum distance from the set of distance measurement values.

2. The laser measuring apparatus of claim 2, **characterized in that** the controller is further adapted to stop the continuously transmitting and receiving the laser signals upon receiving a second command from the user input module.

3. The laser measuring apparatus of any one of the preceding claims, **characterized in that** the user input module is a button; the first command triggered by the user input module when the user presses down the button.

4. The laser measuring apparatus of claim 2, **characterized in that** the user input module is a button; the second command triggered by the user input module when the user releases the button after the button has been continuously pressed down.

5. A laser measuring method comprising the steps of transmitting a laser signal to a target surface by a laser measuring apparatus; receiving reflected laser signal from the target surface by the laser measuring apparatus, and calculating the distance between the laser measuring apparatus and the target surface; the laser measuring method **characterized in that** it further comprises the step of:
generating a set of distance measurement values by continuously transmitting and receiving laser signals to the target surface as the user points the laser measuring apparatus to different points on the target surface; and
determining the minimum distance from the set of distance measurement values.

6. The laser measuring method of claim 5, **characterized in that** the generating step starts upon a controller of the laser measuring device receiving a first command from a user input module of the laser measuring device.

7. The laser measuring method of claim 6, **characterized in that** the controller is further adapted to stop the continuous transmitting and receiving laser signals upon receiving a second command from the user input module.

8. The laser measuring method of any one of the preceding claims, **characterized in that** the user input module is a button; the first command triggered by the user input module when the user presses down the button.

9. The laser measuring method of claim 7, **characterized in that** the user input module is a button; the second command triggered when the user releases the button after the button has been continuously pressed down.

10. The laser measuring method of any one of the preceding claims, **characterized in that** in the generating step the user points the laser measuring apparatus to points on the target surface which are aligned in a linear trace in which an orthogonal point is included.
